# EUROPEAN PATENT SPECIFICATION

(11) **EP 3 134 492 B1**
(45) Date of publication and mention of the grant of the patent: **23.10.2019**
(21) Application number: 14728319.6
(22) Date of filing: 22.04.2014
(51) Int. Cl.: C10G 29/00, C10G 29/08, C10G 29/20, B01D 53/52, C10G 29/22

(54) **NEW SCAVENGERS OF THE SULPHIDRIC ACID**
NEUE SULFIDISCHE SÄUREFÄNGER
NOUVEAUX AGENTS D'ÉPURATION DE L'ACIDE SULPHIDRIQUE

(43) Date of publication of application: 01.03.2017
(73) Proprietor: Chimec S.p.A., 00144 Roma (IT)
(72) Inventor: BUCCOLINI, Marco, I-62032 Camerino MC (IT); MANTARRO, Milena, I-00174 Rome (IT); QUARANTA, Andrea, I-04011 Aprilia LT (IT)
(74) Representative: Di Giovine, Paolo
(86) International application number: PCT/IB2014/060894
(87) International publication number: WO 2014/174432

(56) References cited:
- WO-A1-01/83435
- CN-A- 102 924 648
- GB-A- 2 125 779
- JP-A- H04 145 113
- JP-A- H08 245 562
- US-A- 4 874 604
- US-A- 5 008 432
- US-A1- 2008 039 344
- US-A1- 2012 329 930

## Description

The present invention relates to new products for H₂S scavenging from fluids and gases, in particular water and hydrocarbon fluids and gases. These products (scavengers) are added to H₂S-containing fluids and are able to selectively react with sulphidric acid and transform it into innocuous, nonvolatile species, which are not released even at very high temperatures (140-150°C).

### State of the Art

H₂S removal from water and hydrocarbon fluids has been the subject of numerous patents: various physical and chemico-physical means are claimed, but in particular the chemical compounds proposed as scavengers of the sulphidric acid are very many. An H₂S scavenger selectively reacts with H₂S forming a different compound (either a salt or an organic tiocompound) which retains the H₂S in the starting fluid, preventing its development in the atmosphere and therefore preventing risks to the health of operators in charge of manipulating H₂S-rich fluids.

In particular, in the petroleum industry H₂S presence is a problem long highlighted, which may derive both from the same composition of the crude oil, rich in sulphides and H₂S, and from the presence of bacteria that, under certain conditions, produce H₂S, thereby increasing the content of this toxic gas in production fluids. Moreover, even during crude oil refining, H₂S can result as cracking product of sulphured compounds present in the crude oil load, and therefore even crude oils initially without this problem, can produce refining residues with variable contents of sulphidric acid, from a few ppm to hundreds of ppm.

GB 2 125 779 A discloses a wet process for removing hydrogen sulfide from a hydrogen sulfide-containing gas.

Currently triazines, and in particular hexahydrotriazines (US5554349-US5480860 - WO92/01481-US4978512) and glyoxal (EP0438812 - US5085842 - US4680127) are widely used as scavengers. However, both these substances are more soluble in water than in hydrocarbons and therefore disperse poorly in crude oil and refinery plant residues, greatly slowing down reaction kinetics.

Actually, triazines, though being the H₂S scavengers most used on the world market, do not exhibit a favorable reaction ratio as they are molecules of rather high molecular weight - 250/300 Daltons - and even though theoretically a triazine molecule might react with several H₂S molecules, in reality, by being scarcely soluble in a hydrocarbon fluid they practically react with a 1:1 molar ratio; therefore, the weight ratio is clearly unfavorable. Triazines which react very quickly in a water environment; in hydrocarbons, in which are scarcely soluble, they have to be strongly overdosed to try to increase the reaction kinetics. However, even when heavily overdosing them and, in the presence of dispersing agents such as quaternary ammonium salts and oxyethylated amines, the reaction rate in heavy fluids such as fuel oils is very limited. Other drawbacks in triazine use are:
- They cannot be used on bitumens, as their thermal stability is at the limit at the temperatures at which bitumens are manipulated (150 - 200°C), and also the adduct formed from the reaction between triazines and H₂S tends to decompose at those temperatures, re-forming the starting H₂S
- According to the latest EC rules, many triazines are classified as extremely toxic substances, lethal when inhaled.
- They cannot be used on H₂S-containing naphthas and kerosenes, since triazine synthesis envisages formation of a certain amount of water and therefore are marketed in concentrated water solutions. When water addition is strictly forbidden (gasolines, naphthas, kerosenes), triazine use is impossible.

A solution to triazines' scarce compatibility with hydrocarbon fluids has been surmised in various patents, and attempts at obviating this problem were made by combining triazine with a dispersing agent (ammonium salts or oxyethylated amines - US5744024) or modifying the lipophilicity of triazine itself, by inserting in the molecule substituents having a rather long hydrocarbon chain (US5354453 - US5347004).

When triazines cannot be used, the use of organometallic compounds such as zinc octoate is quite well-established. Besides these typologies of organic compounds, above all to treat strong hydrocarbon environments such as fuel oils and bitumens, a long series of organometallic compounds were considered in H₂S scavenging. At the forefront, zinc and iron compounds, above all organic ones such as octoate (EP0121377 - EP421683 - US4252655 - US5000835); moreover, dispersions of powdered oxide, above all zinc oxides, and inorganic salts (WO2009/076420 - US2008/0039344 - US6599472 - WO2005/065177 - WO 2009 - 105444) have been proposed. Furthermore, copper, cadmium, mercury, silver, nickel and magnesium and compounds thereof were used. Also this class of compounds, though affording a partial solution to the problem of solubility in hydrocarbons (with consequent improved mixability with fuel oils and bitumens) entails drawbacks:
- containing a metal, they cannot be used in gasolines, naphthas, kerosenes.
- the stoichiometric ratio with H₂S is markedly penalizing for this class of scavengers (very high molecular weight (MW); therefore, they have to be used in a very high weight ratio relative to the H₂S present (1:15 / 1:20 H₂S relative to Zn octoate).
- When in a concentrated solution, metallic salts are markedly viscous and therefore scarcely manipulable/dispersible in cold climates; when diluted to be better manipulated/dispersed the use ratio grows even more, making them highly penalized economically.

Hence, the need to overcome these drawbacks was felt in the state of the art. Therefore, object of the present invention is to provide scavengers not entailing such drawbacks. Therefore, object of the present invention are the scavengers of claim 1. Further objects are specified in the dependent claims.

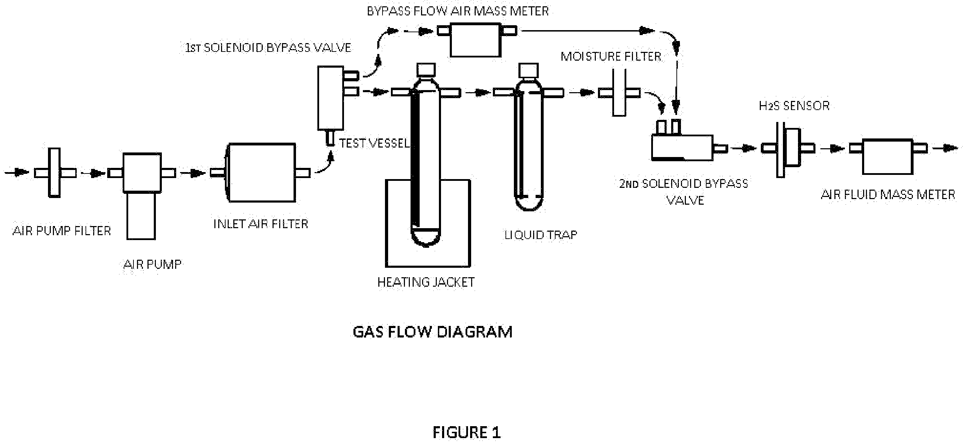

### Brief description of the figure

A figure (1) showing an operation diagram of the Seta H₂S Analyzer is enclosed to the present description.

### Description of the Invention

The H₂S scavengers according to the present invention are employed in water and hydrocarbon fluids and gases present in crude oil extraction and refining processes, particularly before and after the refining processes. The invention relates to the use of H₂S scavengers as specified in claim 1.

The ratio between the compounds of general formula I and the amine varies from 5:1 to 1:1 (weight/weight), preferably from 2.5:1 to 1.5:1 with reference to the total weight of the scavenger. Without being bound to particular reaction mechanisms, it can be assumed that amine presence strongly catalyzes the reaction between MMA and H₂S: laboratory data confirm that scavenging efficacy is multiplied in the presence of amines: even though efficacy is not a factor that can be accurately quantitated, it being dependent on reaction conditions, temperature, contact times, etc., it can however be stated that it increases 2- to 10-fold. Thus, reaction kinetics is sped up, enabling H₂S clearing at very low ratios.

In one embodiment, the used scavenger comprises, besides at least one compound of formula I and at least one amine, metallic salts and/or organometallic compounds and/or metallic complexes with ammonia or EDTA. The metals employed belong to the class formed by iron, copper, silver, sodium, potassium and zinc. Advantageously, the weight/weight ratio between the compound of formula I and metallic salts and/or organometallic compounds and/or metallic complexes with ammonia or EDTA varies from 1:100 to 1:10 with reference to the total weight of the scavenger. Preferred metallic salts are sulphates, chlorides and/or nitrates, whereas the organometallic compounds are selected from the class formed by acetates, aspirinates, gluconates and/or ascorbates.

In one embodiment, the used scavenger comprises, besides at least one compound of formula I, at least one amine and metallic salts and/or organometallic compounds and/or metallic complexes with ammonia or EDTA, further comprises a dispersing agent. Advantageously said dispersing agent belongs to the class formed by non-ionic and cationic surfactants, in particular quaternary ammonium salts, oxyethylated amines, alcohols and oxyethylated phenols.

H₂S-containing fluids treatable with the scavenger according to the present invention can be from crude oil to all petroleum cuts such as gasoline, Kerosene, diesel oil, the heavy residues, coming both from atmospheric and vacuum distillation plants, and from thermal and catalytic cracking plants (FCC slurry, visbreaking residue, LC Finer/H-Oil). Moreover, said technology can be applied on heavy refinery end products, such as bitumen and fuel oils.

The use of scavengers containing compounds of formula I wherein R is methyl ensures the following advantages:
- It is a substance not particularly dangerous for manipulation
- Usable on H₂S-containing naphthas and kerosenes, as not containing water and not being particularly soluble in water
- Does not contain metals.
- It is very reactive toward H₂S, and the stoichiometric ratio with H₂S is favorable (very low MW); therefore, it can be dosed in a very low weight ratio (1:5 / 1:8 H₂S relative to MMA).
- It is perfectly fluid even without heating.

Amines particularly effective for this purpose are ethylenediamine, monoethanolamine, dimethylispropanolamine, dimethylaminopropylamine, dicyclohexylamine, dimethylcyclohexylamine, tributylamine, tetraethylenepentamine (TEPA).

Scavenger efficacy tests were conducted by following the IP 570 method (ASTM D 7621); specifically, the Seta H₂S Analyzer was used, which follows the abovecited method. This instrument enables direct analysis of crude oil over short times (15 minutes). Hereinafter, a brief description: oil is additivated at a given dosage ratio and left under incubation at 35°C and at rest. At the time of interest, a known volume of sample is collected, which is dissolved into the analysis diluent, and the whole is heated at 60°C. With an air flow of 30L/min, H₂S is stripped from the solution and carried to the electrochemical sensor. After 15' scrubbing, H₂S content is calculated on the basis of sensor-detected mV and analyzed sample amount. Another method (UOP 163-80) can be used for the same purpose: a sample of the liquid hydrocarbon to be analyzed is placed in a potentiometric cell in ammonia-isopropyl alcohol, titrating with silver nitrate in alcoholic solution. As reference electrode a glass electrode is used, whereas the measurement electrode is a silver/silver sulphide one.

By this method it is possible to measure the amount of mercaptans and H₂S present, directly from the titration curve. The analysis can be performed manually by an operator or automatically, using an automatic titrator.

Seven examples are enclosed to the present description.

### Example 1:

A model solution (80% isopar L and 20% Solvesso 150) was doped with about 150 ppm of H₂S. With said solution, efficiency measurements were performed for various chemicals, both oil-soluble and water-soluble ones. Additivations were carried out at ambient temperature and at an active dosage ratio of 1:1 relative to the H₂S titer. Additivated products were kept at 40°C and under bland stirring over different times.

| | Abatement % | Abatement % |
|---|---|---|
| Product | 3 hours | 24 hours |
| Triazine (reference) | 29.7 | 81.2 |
| Glyoxal (reference) | 43.7 | 75.5 |
| MMA (reference) | 12.6 | 64.7 |
| MMA + DMAPA (amine) | 89.4 | 93.5 |
| MMA + DMAPA + Potassium aspirinate | 98.2 | 99 |
| MMA + DMAPA + Potassium aspirinate+ Dispersing agent | 99.2 | 99.8 |

The innovative products according to this patent application were tested relative to two reference additives (Triazine and Glyoxal).

Tests were repeated in the presence of MMA coupled to other Potassium compounds (sulphate, nitrate, acetate, aspirinate, gluconate and ascorbate), obtaining abatement percentages similar to those reported.

### Example 2:

A Fuel Oil sample was fluxed with 25% xylene and doped with about 73 ppm of H₂S. Tests were performed at 60°C. Additivations were performed at ambient temperature and at variable dosage ratios (1:6 - 1:3 - 1:1) relative to the H₂S titer.

| | Dosage ratio | Contact time at 60°C | H₂S ppm (UOP) |
|---|---|---|---|
| Blank | - | - | 18 |
| Triazine (reference) | 1:6 | 4 h | 0 |
| Copper ascorbate + Dispersing agent | 1:6 | 4 h | 0 |
| MMA + DMAPA + Potassium aspirinate | 1:6 | 4 h | 0 |
| MMA + DMAPA + Copper ascorbate | 1:6 | 4 h | 0 |
| Triazine (reference) | 1:3 | 4 h | 0 |
| MMA + DMAPA + Copper ascorbate | 1:3 | 4 h | 3.1 |
| Copper ascorbate + Dispersing agent | 1:3 | 4 h | 10.2 |
| MMA + DMAPA + Potassium aspirinate | 1:3 | 4 h | 0 |
| Triazine (reference) | 1:1 | 4 h | 0 |
| Copper ascorbate + Dispersing agent | 1:1 | 4 h | 9.9 |
| MMA + DMAPA + Potassium aspirinate | 1:1 | 4 h | 0 |

Tests were repeated by replacing the indicated Potassium and Copper compounds with other derivatives of the same metals (complexes with ammonia and EDTA, sulphates, chlorides, nitrates, acetates, aspirinates, gluconates and/or ascorbates) obtaining abatement percentages similar to those reported.

### Example 3 (not according to the invention):

A real sample of Iran Light Crude Oil containing about 60 ppm of H₂S was used. Tests and additivations were carried out at 35°C, and additivated samples were left in an hermetically sealed vessel for 3 hours in the absence of stirring.

| | % abatement |
|---|---|
| Product | 3 hours |
| Triazine (reference) | 62.4 |
| MMA | 44.5 |
| MMA + TEPA (amine) | 93.3 |

### Example 4 (not according to the invention):

A set of samples of modified road Bitumen having a high H₂S content were additivated with 500 ppm of product. Samples were left in sealed containers for 4 hours and then for 24 hours, without any stirring. A certain loss of H₂S concentration was found also in blanks, probably due to a less than perfect seal of the containers: in any case, it was possible to assess the efficacy as H₂S scavengers of the various products tested.

| Additive | Dosage | Initial H₂S | H₂S - 4h | H₂S - 24h |
|---|---|---|---|---|
| | ppm | ppm | ppm | ppm |
| Blank | - | 113.6 | 86 | 68 |
| Zinc octoate (reference) | 500 | - | 18 | 15.7 |
| Potassium aspirinate + Dispersing agent | 500 | - | 38.7 | 27.5 |
| Copper EDTA + Dispersing agent | 500 | - | 13.1 | 8 |
| Iron gluconate+ Dispersing agent | 500 | - | 26.8 | 23.2 |
| Blank | - | 127 | 96 | 83 |
| Zinc octoate (reference) | 700 | - | 26.9 | 13.7 |
| Potassium aspirinate + Dispersing agent | 700 | - | 51.8 | 33.4 |
| Copper EDTA + Dispersing agent | 700 | - | 18.4 | 3 |
| Iron gluconate + Dispersing agent | 700 | - | 43 | 32.2 |

Tests were repeated by replacing the indicated Potassium, Iron and Copper compounds with other derivatives of the same metals (complexes with ammonia and EDTA, sulphates, chlorides, nitrates, acetates, aspirinates, gluconates and/or ascorbates) obtaining abatement percentages similar to those reported.

### Example 5 (not according to the invention):

A battery of tests were performed on H₂S-containing light Naphtha. The products were tested at various dosage ratios; it is important to note that Naphtha specifications rule out water presence in even a minimal amount, therefore water-containing products are absolutely to be avoided.

| Sample | MMA | H₂S | MMA + TributylAmine | H₂S |
|---|---|---|---|---|
| | ppm | ppm | ppm | ppm |
| Blank 1 | - | 3 | - | 3 |
| 5:1 ratio | | | 15 | 2 |
| 10:1 ratio | 30 | 2 | 30 | <1 |
| Blank 2 | - | 4 | - | 4 |
| 5:1 ratio | | | 20 | 3 |
| 10:1 ratio | 40 | 3 | 40 | 2 |

| Sample | MMA | H₂S | MMA + MEA | H₂S |
|---|---|---|---|---|
| | ppm | ppm | ppm | ppm |
| Blank 3 | - | 34 | - | 34 |
| 5:1 ratio | 170 | 28 | 170 | <1 |
| 10:1 ratio | 340 | 6 | 340 | <1 |

### Example 6 (not according to the invention):

Some samples of H₂S-containing Fuel Oil were additivated. Samples were left in sealed containers, without any stirring: some were analyzed immediately after additivation (10 min.), others after 3 hours. H₂S residue was tested by an internal method (air insufflation to drag away H₂S and assessment of gas output from the vessel with a calibrated Draeger vial, specific for H₂S determination).

| Sample | Additivation ratio (Scavenger/ H₂S) | residual H₂S (ppm) | |
|---|---|---|---|
| Blank | -- | 5.54 | - |
| Copper EDTA + dispersing agent | 15:1 | 1.76 | 10' (immediate analysis) |
| Copper EDTA + dispersing agent | 15:1 | < 1 | 3 h |
| Triazine (reference) | 5:1 | 4.7 | 10' (immediate analysis) |
| Triazine (reference) | 5:1 | 1.07 | 3 h |

Tests were repeated by replacing the Copper (EDTA) compound with the Copper - ammonia compound, with Copper sulphate, chloride, nitrate, acetate, aspirinate, gluconate and ascorbate, obtaining abatement percentages similar to those reported.

### Example 7:

A set of samples of H₂S-containing Fuel Oil were additivated. Samples were left in sealed containers, at 60°C, without any stirring: some were analyzed at +1 hour from additivation, others at +3 hours. H₂S residue was tested by IP 570 method (Seta analyzer).

| Sample | Dosage ratio (Product/ H₂S) | H₂S (IP 570) mg/kg | Contact time | Temperature (°C) |
|---|---|---|---|---|
| Blank | - | 20.6 | 0 | 60 |
| Blank | - | 17.5 | 3 | 60 |
| Triazine (reference) | 7:1 | 1.3 | 3 | 60 |
| MMA | 7:1 | 3.2 | 1 | 60 |
| MMA | 7:1 | 2.1 | 3 | 60 |
| Copper (NH₃) + dispersing agent | 7:1 | 2.8 | 1 | 60 |
| Copper (NH₃) + dispersing agent | 7:1 | 1.0 | 3 | 60 |
| Copper (NH₃) + MMA + DMAPA + dispersing agent | 7:1 | 2.6 | 1 | 60 |
| Copper (NH₃) + MMA + DMAPA + dispersing agent | 7:1 | 1.3 | 3 | 60 |

Tests were repeated by replacing the Copper (EDTA) compound with the Copper - ammonia compound, with Copper sulphate, chloride, nitrate, acetate, aspirinate, gluconate and ascorbate, obtaining abatement percentages similar to those reported.

## Claims

1. Use of at least one compound of the following formula I 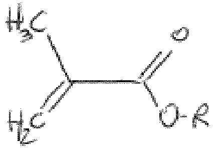 wherein R is selected from the class formed by methyl, 2-(diethylamino)-ethyl, butyl, glycidyl, ethyl, benzyl, lauryl, allyl, stearyl, hydroxypropyl, isobutyl, phenyl, isobornyl, cyclohexyl, propyl, tert-butyl, sec-butyl, n-propyl and at least one amine, selected from the class formed by ethylenediamine, monoethanolamine, dimethylisopropanolamine, and dimethylaminopropylamine as H₂S scavenger in water and hydrocarbon fluids and gases present in crude oil extraction and refining processes.

2. Use of a Scavenger according to claim 1 wherein R is selected from the class formed by methyl, ethyl, propyl.

3. Use of a Scavenger according to claim 1 or 2, wherein the ratio compound of general formula I /amine varies from 5:1 to 1:1 (weight/weight), preferably from 2.5:1 to 1.5:1, with reference to the total weight of the scavenger.

4. Use of a Scavenger according to at least one of the preceding claims further comprising metallic salts and/or organometallic compounds and/or metallic complexes with ammonia or EDTA, said metals being selected from the class formed by iron, copper, silver, sodium, potassium and zinc, wherein the weight/weight ratio between the compound of formula I and metallic salts and/or organometallic compounds and/or metallic complexes with ammonia or EDTA varies from 1:100 to 1:10.

5. Use of a Scavenger according to claim 4 wherein said metallic salts are selected from the class formed by sulphates, chlorides and/or nitrates.

6. Use of a Scavenger according to claim 4 wherein said organometallic compounds are selected from the class formed by acetates, aspirinates, gluconates and/or ascorbates.

7. Use of a Scavenger according to at least one of the preceding claims further comprising a dispersing agent.

8. Use of a Scavenger according to claim 7, wherein said dispersing agent is selected from the class formed by non-ionic and cationic surfactants, in particular quaternary ammonium salts, oxyethylated amines, alcohols and oxyethylated phenols.

## Patentansprüche

1. Verwendung mindestens einer Verbindung gemäß der folgenden Formel I 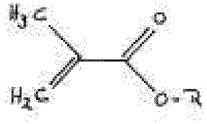 wobei R aus der folgenden Kategorie ausgewählt wird: Methyl, 2-(Diethylamino)-ethyl, Butyl, Glycidyl, Ethyl, Benzyl, Lauryl, Allyl, Stearyl, Hydroxypropyl, Isobutyl, Phenyl, Isobornyl, Cyclohexyl, Propyl, tert-Butyl, sec-Butyl, n-Propyl und mindestens ein Amin, das aus der folgenden Kategorie ausgewählt wird: Ethylendiamin, Monoethanolamin, Dimethylisopropanolamin und Dimethylaminopropylamin als H₂S-Fänger in Wasser und Kohlenwasserstoffflüssigkeiten und Gasen, die bei der Erdölförderung und Veredelungsverfahren vorkommen.

2. Verwendung eines Fängers gemäß Anspruch 1, wobei R aus der folgenden Kategorie ausgewählt wird: Methyl, Ethyl, Propyl.

3. Verwendung eines Fängers gemäß Anspruch 1 oder 2, wobei das Verhältnis einer Verbindung gemäß der allgemeinen Formel I zu Amin zwischen 5:1 und 1:1 (Gewicht/Gewicht) variiert, vorzugsweise zwischen 2,5:1 und 1,5:1, bezogen auf das Gesamtgewicht des Fängers.

4. Verwendung eines Fängers gemäß mindestens einem der vorangehenden Ansprüche, der weiterhin umfasst: Metallsalze und/oder Organometallverbindungen und/oder Metallkomplexe mit Ammoniak oder EDTA, wobei die Metalle aus der folgenden Kategorie ausgewählt werden: Eisen, Kupfer, Silber, Natrium, Kalium und Zink, wobei das Gewicht/Gewicht-Verhältnis zwischen der Verbindung gemäß Formel I und Metallsalzen und/oder Organometallverbindungen und/oder Metallkomplexen und Ammoniak oder EDTA zwischen 1:100 und 1:10 variiert.

5. Verwendung eines Fängers gemäß Anspruch 4, wobei die Metallsalze aus der folgenden Kategorie ausgewählt werden: Sulfate, Chloride und/oder Nitrate.

6. Verwendung eines Fängers gemäß Anspruch 4, wobei die Organometallverbindungen aus der folgenden Kategorie ausgewählt werden: Azetate, Aspirinate, Gluconate und/oder Ascorbate.

7. Verwendung eines Fängers gemäß mindestens einem der vorangehenden Ansprüche, der weiterhin ein Dispersionsmittel umfasst.

8. Verwendung eines Fängers gemäß Anspruch 7, wobei das Dispersionsmittel aus der folgenden Kategorie ausgewählt wird: nicht ionische und kationische Tenside, im Besonderen quartäre Ammoniumsalze, oxyethylierte Amine, Alkohole und oxyethylierte Phenole.

## Revendications

1. Utilisation d'au moins un composé de formule I suivante 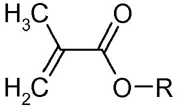 dans laquelle R est choisi dans l'ensemble constitué par méthyle, 2-(diéthylamino)éthyle, butyle, glycidyle, éthyle, benzyle, lauryle, allyle, stéaryle, hydroxypropyle, isobutyle, phényle, isobornyle, cyclohexyle, propyle, tert-butyle, sec-butyle, n-propyle,
et d'au moins une amine choisie dans l'ensemble constitué par l'éthylènediamine, la monoéthanolamine, la diméthylisopropanolamine et la diméthylaminopropylamine, en tant que piégeur de H₂S dans l'eau et les fluides et gaz hydrocarbonés présents dans les procédés d'extraction et de raffinage du pétrole brut.

2. Utilisation d'un piégeur selon la revendication 1, dans laquelle R est choisi dans l'ensemble constitué par méthyle, éthyle, propyle.

3. Utilisation d'un piégeur selon la revendication 1 ou 2, dans lequel le rapport du composé de formule générale I à l'amine varie de 5/1 à 1/1 (poids/poids), de préférence de 2,5/1 à 1,5/1, en référence au poids total du piégeur.

4. Utilisation d'un piégeur selon au moins l'une des revendications précédentes, comprenant en outre des sels métalliques et/ou des composés organométalliques et/ou des complexes métalliques avec de l'ammoniac ou de l'EDTA, lesdits métaux étant choisis dans l'ensemble constitué par le fer, le cuivre, l'argent, le sodium, le potassium et le zinc, dans laquelle le rapport en poids entre le composé de formule I et les sels métalliques et/ou les composés organométalliques et/ou les complexes métalliques avec de l'ammoniac ou de l'EDTA varie de 1/100 à 1/10.

5. Utilisation d'un piégeur selon la revendication 4, dans laquelle lesdits sels métalliques sont choisis dans l'ensemble constitué par les sulfates, les chlorures et/ou les nitrates.

6. Utilisation d'un piégeur selon la revendication 4, dans laquelle lesdits composés organométalliques sont choisis dans l'ensemble constitué par les acétates, les aspirinates, les gluconates et/ou les ascorbates.

7. Utilisation d'un piégeur selon au moins l'une des revendications précédentes, comprenant en outre un agent dispersant.

8. Utilisation d'un piégeur selon la revendication 7, dans laquelle ledit agent dispersant est choisi dans l'ensemble constitué par les tensioactifs non-ioniques et cationiques, en particulier les sels d'ammonium quaternaire, les amines éthoxylées, les alcools et les phénols éthoxylés.
